# EUROPÄISCHE PATENTSCHRIFT

(11) **EP 0 520 511 B1**
(45) Veröffentlichungstag und Bekanntmachung des Hinweises auf die Patenterteilung: **10.05.1995**
(21) Anmeldenummer: 92110912.0
(22) Anmeldetag: 27.06.1992
(51) Int. Cl.: H01M 2/10, H04N 5/225

(54) **Batterie-Pack für eine Videokamera**
Battery pack for a video camera
Paquet de batteries pour une caméra vidéo

(30) Priorität: 28.06.1991 DE 9107976 U
(43) Veröffentlichungstag der Anmeldung: 30.12.1992
(73) Patentinhaber: Hähnel, Walter, Rochestown, Co. Cork (IE)
(72) Erfinder: Hähnel, Walter, Rochestown, Co. Cork (IE)
(74) Vertreter: Berkenfeld, Helmut, Dipl.-Ing.

(56) Entgegenhaltungen:
- EP-A- 0 444 849
- EP-A- 0 480 706
- US-A- 4 515 872

## Beschreibung

Die Erfindung betrifft einen Batterie-Pack für eine Videokamera, insbesondere einen Camcorder, mit einem Gehäuse zur Aufnahme der Batterien, mit in der Anschlußseite des Gehäuses vorgesehenen viereckigen Vertiefungen zur Aufnahme von an der Videokamera vorgesehenen Vorsprüngen zum mechanischen Anschluß des Batterie-Packs an die Videokamera und mit elektrischen Kontakten in der Anschlußseite des Gehäuses zur Anlage und zum elektrischen Anschluß an Kontakte in der Videokamera.

Batterie-Packs dieser Art, die in einem Kunststoffgehäuse im allgemeinen wiederaufladbare Batterien oder Kameras enthalten, werden auf eine Videokamera aufgesetzt und dabei mechanisch und elektrisch mit dieser verbunden. Zur mechanischen Verbindung dienen an der Videokamera vorgesehene quadratische oder rechteckförmige Vorsprünge, die in entsprechende Vertiefungen in der Anschlußseite des Gehäuses hineinpassen und mit diesen verrasten. Für die Form und Anordnung dieser Vorsprünge gibt es keine Norm. Dies bedeutet, daß ein Batterie-Pack mit einer bestimmten Form und Anordnung seiner Vertiefungen nur an eine oder eine begrenzte Zahl von Videokameras angesetzt werden kann. Ein Besitzer verschiedener Videokameras muß daher im allgemeinen mehrere Batterie-Packs besitzen. Er kann sie nicht untereinander austauschen. Ebensowenig können Freunde und Bekannte, die sich mit ihren Videokameras gegenseitig helfen und diese verleihen, die Batterie-Packs im gleichen Umfang verleihen. Ebenso kommt es vor, daß ein Batterie-Pack beim Kauf einer neuen Videokamera wertlos wird. Schließlich wird auch der Handel belastet, da er in sämtlichen Stufen eine große Zahl von Batterie-Packs mit unterschiedlicher Form und Anordnung der Vertiefungen auf Lager halten muß.

Von diesem Stand der Technik ausgehend liegt der Erfindung die Aufgabe zugrunde, einen Batterie-Pack so auszubilden, daß er an Videokameras mit verschiedener Anordnung und Form der Vorsprünge angesetzt werden kann. Die Lösung für diese Aufgabe ergibt sich bei einem Batterie-Pack der eingangs genannten Gattung dadurch, daß in der Anschlußseite des Gehäuses eine die in dieser vorgesehenen Vertiefungen teilweise überdeckende Ausnehmung vorgesehen und ein Schieber in dieser Ausnehmung verschiebbar geführt ist, im Schieber Vertiefungen zur Aufnahme von Vorsprüngen und in dessen den Vertiefungen in der Anschlußseite zugekehrten Schmalseite Aussparungen vorgesehen sind, die die Vertiefungen in der Anschlußseite des Gehäuses in der einen Endstellung des Schiebers abdecken und in der anderen Endstellung freigeben. In der Anschlußseite des Gehäuses ist somit ein Schieber zwischen zwei Endstellungen verschiebbar. Dessen Außen- oder Oberseite weist Vertiefungen auf. Weiter ist der Schieber so ausgebildet, daß er in seiner einen Endstellung die Vertiefungen in der Anschlußseite ganz oder teilweise abdeckt und in der anderen Endstellung freigibt. Dies bedeutet, daß die im Schieber vorgesehenen Vertiefungen in dessen beiden Endstellungen voll zur Verfügung stehen, während die in der Anschlußseite vorgesehenen Vertiefungen in der einen Endstellung voll zur Verfügung stehen und in der anderen Endstellung teilweise oder ganz abgedeckt sind.

Mit einer einfachen Bewegung des Schiebers zwischen dessen beiden Endstellungen ergibt sich dabei eine andere Anordnung und auch Form der Vertiefungen in der Anschlußseite des Batterie-Packs. Damit läßt sich ein einziger Batterie-Pack an Videokameras mit verschiedener Form und Anordnung der Vorsprünge ansetzen. Die oben genannten Nachteile der bekannten Batterie-Packs entfallen damit. Dies bringt Vorteile sowohl für die Besitzer der Videokameras als auch für den Handel.

Am Beispiel der in der Zeichnung gezeigten Ausführungsform wird die Erfindung nun weiter beschrieben. Die Zeichnung zeigt die Anschlußseite eines erfindungsgemäß ausgebildeten Batterie-Packs. In der Zeichnung ist:
- Fig. 1: eine Ansicht dieser Anschlußseite mit sich in einer Endstellung befindendem Schieber,
- Fig. 2: eine teilweise Seitenansicht in Blickrichtung des Pfeiles II in Fig. 1,
- Fig. 3: eine Ansicht ähnlich Fig. 1 mit sich in der anderen Endstellung befindendem Schieber und
- Fig. 4: eine teilweise Seitenansicht in Blickrichtung des Pfeiles IV in Fig. 3.

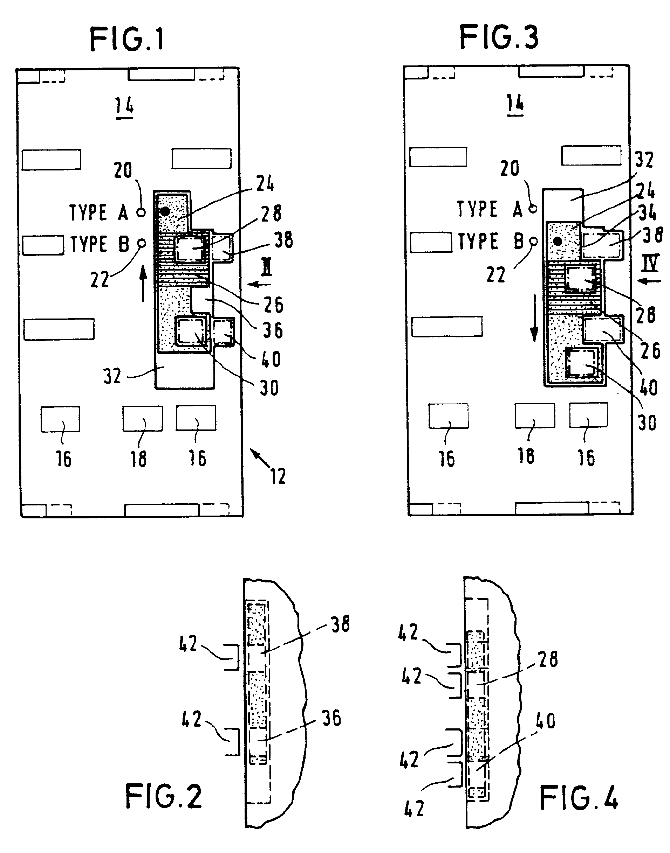

Vom Gehäuse 12 des Batterie-Packs wird in den Figuren 1 und 3 dessen Anschlußseite 14, die Rückseite, gezeigt. In ihrem unteren Bereich weist diese Kontakte 16 und einen thermischen Sensor 18 auf. Weitere Kontakte, die nicht bezeichnet sind, sind an anderen Stellen der Anschlußseite 14 angeordnet. Diese Kontakte 16, die nicht zum Gegenstand der Erfindung gehören, sind metallische Flächen, die durch Anlage an entsprechenden Stellen oder Vorsprüngen an der Videokamera elektrischen Kontakt geben. Auf der Anschlußseite 14 befinden sich weiter Kennmarken 20 und 22. Diese sind mit Type A und Type B bezeichnet. Sie weisen auf verschiedene Videokameras mit verschiedener Anordnung und Form von deren Vorsprüngen hin. Sie zeigen weiter die beiden Endstellungen des Schiebers 24 an. Dieser weist eine geriefte Grifffläche 26 auf. Quadratische Vertiefungen 28 und 30 sind im Schieber 24 vorgesehen. Dieser wird in einer Ausnehmung 32 der Anschlußseite 14 aufgenommen. In dieser ist er zwischen seinen beiden Endstellungen verschiebbar. Die in den Figuren 1 und 3 rechts liegende Kante des Schiebers ist nicht gerade, sondern weist Aussparungen 34 und 36 auf. Bei Blick auf die Figuren 1 und 3 liegt die Aussparung 34 über der Aussparung 36. Die Anschlußseite 14 selbst weist rechteckförmige Vertiefungen 38 und 40 auf. Die Figuren 2 und 4 zeigen noch schematisch Seitenansichten der an der Videokamera angeordneten Vorsprünge 42. Diese können quadratisch oder rechteckförmig sein. Sie passen in die in der Anschlußseite 14 und im Schieber 24 vorgesehenen Vertiefungen.

In den Figuren 1 und 2 nimmt der Schieber 24 seine obere Endstellung ein. Der in seinem oberen Bereich vorgesehene schwarze Punkt liegt neben der Kennmarke 20. Diese ist Videokameras der Type A zugeordnet. In seiner in den Figuren 3 und 4 gezeigten unteren Endstellung liegt der schwarze Punkt neben der Kennmarke 22. Diese ist Videokameras der Type B zugeordnet. Durch einfaches Verschieben in Richtung der in die Figuren 1 und 3 eingezeichneten Pfeile wird der Schieber 24 in seine obere und untere Endstellung gebracht.

Bei der in Fig. 1 gezeigten oberen Endstellung des Schiebers 24 liegen sowohl die Vertiefungen 28 und 38 als auch die Vertiefungen 30 und 40 jeweils horizontal nebeneinander. Bei Videokameras der Type A liegen deren Vorsprünge 42 in gleicher Weise paarweise horizontal nebeneinander. Diese Vorsprünge 42 können dann, wie dies in Fig. 2 angedeutet wird, in die Vertiefungen 28 und 38 wie auch 30 und 40 eingeschoben werden. Bei der in Fig. 1 gezeigten Endstellung des Schiebers 24 deckt dieser die Vertiefungen 38 und 40 teilweise ab. Von diesen Vertiefungen bleiben, auch wenn dies in Fig. 1 nicht richtig zum Ausdruck kommt, quadratische Bereiche frei. Das heißt, daß das Gehäuse 12 in dieser Endstellung des Schiebers 24 paarweise nebeneinanderliegende quadratische Vertiefungen aufweist. Bei der in den Figuren 3 und 4 gezeigten unteren Endstellung des Schiebers 24 sind die rechteckförmigen Vertiefungen 38 und 40 frei. Dies ergibt sich daraus, daß die Aussparungen 34 und 36 - bei Blick auf Fig. 3 - links neben ihnen liegen. Die quadratischen Vertiefungen 28 und 30 liegen nun unterhalb der rechteckförmigen Vertiefungen 38 und 40. In dieser Endstellung des Schiebers 24 für Videokameras der Type B kann diese damit mit in der Längs- und der Querachse gegeneinander versetzten rechteckförmigen und quadratischen Vorsprüngen 42 in die Vertiefungen eingreifen. Dies wird in Fig. 4 angedeutet. Zwei rechteckförmige Vorsprünge 42 passen in die Vertiefungen 38 und 40, während zwei weitere quadratische Vorsprünge 42 in die Vertiefungen 28 und 30 eingreifen.

## Patentansprüche

1. Batterie-Pack für eine Videokamera, insbesondere einen Camcorder, mit einem Gehäuse zur Aufnahme der Batterien, mit in der Anschlußseite des Gehäuses vorgesehenen viereckigen Vertiefungen zur Aufnahme von an der Videokamera vorgesehenen Vorsprüngen zum mechanischen Anschluß des Batterie-Packs an die Videokamera und mit elektrischen Kontakten in der Anschlußseite des Gehäuses zur Anlage und zum elektrischen Anschluß an Kontakte in der Videokamera, dadurch gekennzeichnet, daß in der Anschlußseite (14) des Gehäuses (12) eine die in dieser vorgesehenen Vertiefungen (38, 40) teilweise überdeckende Ausnehmung (32) vorgesehen und ein Schieber (24) in dieser Ausnehmung (32) verschiebbar geführt ist, im Schieber (24) Vertiefungen (28, 30) zur Aufnahme von Vorsprüngen (38) und in dessen den Vertiefungen (38, 40) in der Anschlußseite (14) zugekehrten Schmalseite Aussparungen (34, 36) vorgesehen sind, die die Vertiefungen (38, 40) in der Anschlußseite (14) des Gehäuses (12) in der einen Endstellung des Schiebers (24) abdecken und in der anderen Endstellung freigeben.

2. Batterie-Pack nach Anspruch 1, dadurch gekennzeichnet, daß die den Schieber (24) aufnehmende Ausnehmung (32) mit ihrer einen Längsseite durch die Mitte der in der Anschlußseite (14) des Gehäuses (12) vorgesehenen Vertiefungen (38, 40) verläuft.

3. Batterie-Pack nach Anspruch 1, dadurch gekennzeichnet, daß die in der Anschlußseite (14) des Gehäuses (12) vorgesehenen Vertiefungen (38, 40) rechteckförmig sind.

4. Batterie-Pack nach einem oder mehreren der Ansprüche 1 bis 3, dadurch gekennzeichnet, daß die in der Anschlußseite (14) des Gehäuses (12) vorgesehenen Vertiefungen (38, 40) mit ihren längeren Seiten unter 90° zu den Längsseiten der Ausnehmung (32) verlaufen.

5. Batterie-Pack nach einem oder mehreren der Ansprüche 1 bis 4, dadurch gekennzeichnet, daß die in dem Schieber (24) vorgesehenen Vertiefungen (28, 30) in dessen einer Endstellung, in der er die Vertiefungen (38, 40) in der Anschlußseite (14) teilweise abdeckt, mit diesen Vertiefungen (38, 40) in der Anschlußseite (14) in einer Linie liegen.

## Claims

1. Battery pack for a video camera, in particular a camcorder, comprising a housing for accommodating the batteries, quandrangular depressions in the connection side of the housing for receiving projections on the video camera for mechanical connection of the battery pack to the video camera, and electrical contacts in the connection side of the housing for bearing against and for electrical connection to contacts in the video camera, characterized in that provided in the connection side (14) of the housing (12) is a recess (32) which partially overlaps the depressions (38, 40) in the connection side (14), and a slider (24) is slidably guided in said recess (32), depressions (28, 30) for receiving projections (42) are provided in the slider (24) and provided in the narrow side of the slider, which is towards the depressions (38, 40) in the connection side (14), are openings (34, 36) which cover over the depressions (38, 40) in the connection side (14) of the housing (12) in the one end position of the slider (24) and uncover them in the other end position.

2. Battery pack according to claim 1, characterized in that the recess (32) which accommodates the slider (24) extends with its one longitudinal side through the middle of the depressions (38, 40) in the connection side (14) of the housing (12).

3. Battery pack according to claim 1, characterized in that the depressions (38, 40) in the connection side (14) of the housing (12) are rectangular.

4. Battery pack according to one or more of claims 1 to 3, characterized in that the depressions (38, 40) in the connection side (14) of the housing (12) extend with their longer sides at 90° to the longitudinal sides of the recess (32).

5. Battery pack according to one or more of claims 1 to 4, characterized in that in the one end position of the slider (24) in which it partially covers the depressions (38, 40) in the connection side (14), the depressions (28, 30) in the slider (24) are in a line with said depressions (38, 40) in the connection side (14).

## Revendications

1. Paquet de piles pour une caméra vidéo, et en particulier un camescope, avec un boîtier destiné à loger les piles, avec des encoches carrées prévues sur la face de raccordement du boîtier et destinées à loger des parties en saillie prévues à la caméra vidéo et pour fixer ainsi mécaniquement le paquet de piles à la caméra vidéo, ainsi qu'avec des contacts électriques prévus sur la face de raccordement du boîtier et destinés à être reliés et raccordés électriquement à des contacts disposés à l'intérieur de la caméra vidéo, caractérisé par le fait que sur la face de raccordement (14) du boîtier (12) est prévu un creux (32) recouvrant en partie les encoches (38, 40) prévues sur cette face et qu'un coulisseau (24) est guidé de manière déplaçable dans ledit creux (32), que dans le coulisseau (24) même sont prévues des encoches (28, 30) destinées à loger des parties en saillie (42) correspondantes et que dans son petit côté adjacent aux encoches (38, 40) prévues sur la face de raccordement (14) sont prévus des évidements (34, 36) qui recouvrent les encoches (38, 40) de la face de raccordement (14) du boîtier (12) dans l'une des deux positions extrêmes du coulisseau (24) et qui les libèrent dans l'autre position extrême.

2. Paquet de piles selon la revendication 1, caractérisé par le fait que l'un des grands côtés du creux (32) dans lequel est logé le coulisseau (24) passe par le centre des encoches (38, 40) prévues sur la face de raccordement (14) du boîtier (12).

3. Paquet de piles selon la revendication 1, caractérisé par le fait que les encoches (38, 40) prévues sur la face de raccordement (14) du boîtier (12) présentent une forme rectangulaire.

4. Paquet de piles selon l'une ou plusieurs des revendications 1 à 3, caractérisé par le fait que l'angle formé par les grands côtés des encoches (38, 40) prévues sur la face de raccordement (14) du boîtier (12) et les grands côtés du creux (32( est un angle droit.

5. Paquet de piles selon l'une ou plusieurs des revendications 1 à 4, caractérisé par le fait que les encoches (28, 30) prévues dans le coulisseau (24) et les encoches (38, 40) prévues sur la face de raccordement (14) se trouvent sur une même ligne, à savoir dans l'une des positions extrêmes du coulisseau (24) dans laquelle celui-ci recouvre en partie lesdites encoches (38, 40) prévues sur la face de raccordement (14).
